(19) **Europäisches Patentamt / European Patent Office / Office européen des brevets**

(11) **EP 4 012 640 A1**

(12) # EUROPEAN PATENT APPLICATION
published in accordance with Art. 153(4) EPC

(43) Date of publication:
**15.06.2022 Bulletin 2022/24**

(21) Application number: **20848941.9**

(22) Date of filing: **22.05.2020**

(51) International Patent Classification (IPC):
**G06Q 30/02** (2012.01)    **G06Q 50/30** (2012.01)

(52) Cooperative Patent Classification (CPC):
**G06Q 30/02; G06Q 50/30**

(86) International application number:
**PCT/JP2020/020231**

(87) International publication number:
**WO 2021/024575 (11.02.2021 Gazette 2021/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.08.2019 JP 2019145290**

(71) Applicant: **Hitachi, Ltd.
Tokyo 100-8280 (JP)**

(72) Inventors:
• **SATA, Mitsuyo**
  **Tokyo 100-8280 (JP)**
• **EDA, Takanori**
  **Tokyo 100-8280 (JP)**
• **IMAI, Masaru**
  **Tokyo 100-8280 (JP)**

(74) Representative: **Mewburn Ellis LLP
Aurora Building
Counterslip
Bristol BS1 6BX (GB)**

(54) **TRAFFIC ADVERTISEMENT DISTRIBUTION SYSTEM, TRAFFIC ADVERTISEMENT DISTRIBUTION PROGRAM, AND TRAFFIC ADVERTISEMENT DISTRIBUTION METHOD**

(57) An object of the present invention is to provide a technique for selecting an advertisement in a vehicle. A typical example of a traffic advertisement distribution system of the present invention is a traffic advertisement distribution system that distributes an advertisement to a vehicle, and includes a measuring unit, an estimating unit, and a distributing unit. The measuring unit measures a leaving passengers amount and a boarding passengers amount of the vehicle for each boarding/leaving facility (hereinafter "station"). Based on a measurement result of the measuring unit, the estimating unit estimates the number of passengers who get on or off one vehicle at a given station (hereinafter "amount of station users"), out of the entire passengers in the one vehicle. The distributing unit changes an advertisement to be distributed to the one vehicle, based on a result of estimation of the amount of station users.

FIG. 1

**Description**

Technical Field

The present invention relates to a traffic advertisement distribution system, a traffic advertisement distribution program, and a traffic advertisement distribution method.

Background Art

PTL 1 discloses a technique by which "based on commuter pass data, data on traffic users in the station yard, such as data on stations close to the users' residences and stations close to the users' offices, are collected and, based on the result of data collection, an advertisement to be displayed in the station yard is selected".
PTL 2 discloses a technique by which "facial images of traffic users who pass through ticket gates of a station are captured and recognized to acquire attribute information, and based on the attribute information, an advertisement displayed in the station yard is updated."

Citation List

Patent Literature

PTL 1: JP 2010-197677 A
PTL 2: JP 2010-282590 A

Summary of Invention

Technical Problem

The techniques of PTL 1 and PTL 2 are techniques for selecting an advertisement in the station yard according to traffic users staying in the station yard, and do not refer to a technique for selecting an advertisement in a moving vehicle.
Passengers in a moving vehicle change dynamically because people get on and off the vehicle every time the vehicle stops at a station. This makes it difficult to timely grasp the attributes of passengers to whom an advertisement sponsor wants to provide an advertisement (hereinafter "target attributes"), thus making in-vehicle advertisement selection difficult.
Besides, passengers do not always get on the vehicle uniformly. The target attributes of passengers, therefore, are unbalanced in each area of the vehicle. This makes advertisement selection for each area of the vehicle further difficult.
An object of the present invention is to provide a technique for selecting an advertisement in a vehicle. Solution to Problem
In order to solve the above problems, a typical example of a traffic advertisement distribution system of the present invention is a traffic advertisement distribution system that distributes an advertisement to a vehicle, and includes a measuring unit, an estimating unit, and a distributing unit. The measuring unit measures a leaving passengers amount and a boarding passengers amount of the vehicle for each boarding/leaving facility (hereinafter "station"). Based on a measurement result of the measuring unit, the estimating unit estimates the number of passengers who get on or off one vehicle at a given station (hereinafter "amount of station users"), out of the entire passengers in the one vehicle. The distributing unit changes an advertisement to be distributed to the one vehicle, based on a result of estimation of the amount of station users.

Advantageous Effects of Invention

The present invention provides a technique for selecting an advertisement in a vehicle.
Problems, configurations, and effects other than those described above will be made clear by the following description of embodiments.

Brief Description of Drawings

[FIG. 1] FIG. 1 is a schematic diagram of a traffic advertisement distribution system.

[FIG. 2] FIG. 2 is a diagram for explaining an overall configuration and an information flow of the traffic advertisement distribution system.

[FIG. 3] FIG. 3 is a flowchart for explaining processing of advertisement information received at a vehicle 2.

[FIG. 4] FIG. 4 is a flowchart for explaining an operation of measuring a leaving passengers amount and a boarding passengers amount.

[FIG. 5] FIG. 5 is a diagram showing specific cases of the amount of station users.

[FIG. 6] FIG. 6 is a diagram showing changes in the amount of station users by formulae.

[FIG. 7] FIG. 7 is a flowchart showing an operation of advertisement matching.

[FIG. 8] FIG. 8 depicts a case where advertisement matching is carried out, using a Gale-Shapley algorithm.

Description of Embodiments

Embodiments of the present invention will hereinafter be described with reference to the drawings.

[First Embodiment]

<<Outline of Configuration of First Embodiment>>

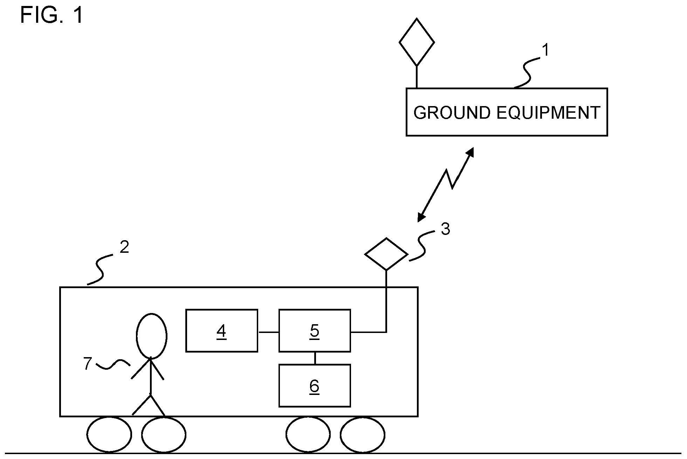

FIG. 1 is a schematic diagram of a traffic advertisement distribution system.

In FIG. 1, the traffic advertisement distribution system includes a ground equipment 1, a wireless device 3 mounted on a vehicle 2, an advertisement display unit 4, a vehicle information control unit 5, and a passengers aboard amount measuring unit 6.

The ground equipment 1 stores information on advertisements and the like. In addition, the ground equipment 1 has a function of collecting and storing information on selection of an advertisement displayed in the vehicle 2.

The wireless device 3 mounted on the vehicle communicates with the ground equipment and receives information on advertisements and the like.

The advertisement display unit 4 is disposed in each of sectional areas of the vehicle 2 (in each of unit cars), and displays an advertisement to passengers 7 in the vehicle.

The passengers aboard amount measuring unit 6 has a function of a "measuring unit" that every time the vehicle 2 stops at a station, measures a leaving passengers amount and a boarding passengers amount in the sectional area of the vehicle 2.

The vehicle information control unit 5 has a function of an "estimating unit" that estimates an areal distribution of the amount of station users in the vehicle, based on a result of measurement of the leaving passengers amount and the boarding passengers amount in each sectional area.

The vehicle information control unit 5 has also a function of a "distributing unit" that changes an advertisement to be distributed to the vehicle 2, based on a result of estimation of the areal distribution of the amount of station users in the vehicle 2 and on information on advertisements.

<<Overall Configuration and Information Flow of First Embodiment>>

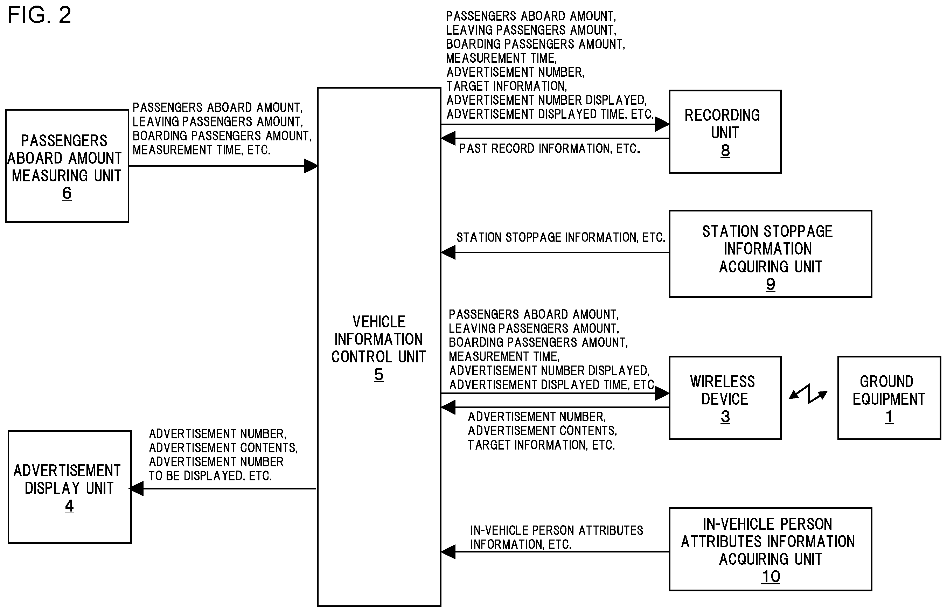

FIG. 2 is a diagram for explaining an overall configuration and an information flow of the traffic advertisement distribution system.

In FIG. 2, the traffic advertisement distribution system further includes a recording unit 8, a station stoppage information acquiring unit 9, and an in-vehicle person attributes information acquiring unit 10. The same constituent elements as shown in FIG. 1 will not be described repeatedly.

The vehicle information control unit 5 acquires advertisement information necessary for providing an advertisement, such as an advertisement number, advertisement contents, and target information indicating target customers to whom an advertisement sponsor wants to provide an advertisement, from the ground equipment 1, via the wireless device 3.

In addition, for each sectional area of the vehicle 2, the vehicle information control unit 5 acquires information on a passengers aboard amount, a leaving passengers amount, a boarding passengers amount, a measurement time, and the like, from the passengers aboard amount measuring unit 6. The passengers aboard amount is the amount representing the number of persons aboard, their weight, and the like. The leaving passengers amount is the amount representing the number of persons getting off the vehicle, their weight, and the like. The boarding passengers amount is the amount representing the number of persons getting on the vehicle, their weight, and the like.

Further, the vehicle information control unit 5 acquires also in-vehicle person attributes information, using the in-vehicle person attributes information acquiring unit 10 and the like.

The vehicle information control unit 5 acquires, from the station stoppage information acquiring unit 9, the station stoppage information indicating at which station the vehicle is stopped or not stopped.

Furthermore, the vehicle information control unit 5 acquires record information, such as a passengers aboard amount, a leaving passengers amount, a leaving-the-vehicle ratio, a boarding passengers amount, a measurement time, an advertisement number, and target information, from the recording unit 8, as past record information (particularly, a record taken in the same time zone on the same day of the week).

The advertisement display unit 4 displays an advertisement in each sectional area of the vehicle 2, according to selection of the advertisement (an advertisement number, advertisement contents, an advertisement number displayed) that is changed by the vehicle information control unit 5.

The vehicle information control unit 5 records information about the above selection of the advertisement onto the recording unit 8 in order to use the information for selection of an advertisement in the future (particularly, in the same time zone on the same day of the week).

In addition, the vehicle information control unit 5 reports, as information related to an advertisement selection result, a passengers aboard amount, a leaving passengers amount, a boarding passengers amount, a measurement time, an advertisement number displayed, an advertisement display time, and the like, to the ground equipment 1 via the wireless device 3.

A principle part of such a traffic advertisement distribution system is configured to be a computer system including a central processing unit (CPU), a memory, and the like as hardware. This hardware executes a traffic advertisement distribution program, thus implementing various functions of the traffic advertisement distribution system. Part or the whole of this hardware may be substituted with a dedicated device, a general-purpose machine-learning machine, a digital signal processor (DSP), a field-programmable gate array (FPGA), a graphics processing unit (GPU), a programmable logic device (PLD), or the like. Part or the whole of the hardware may be concentrated in a server or distributed among servers on a cloud network, in which case a plurality of traffic advertisement distribution systems are used in common via the network.

An operation according to the first embodiment will hereinafter be described in order.

<<Advertisement Information Processing Operation>>

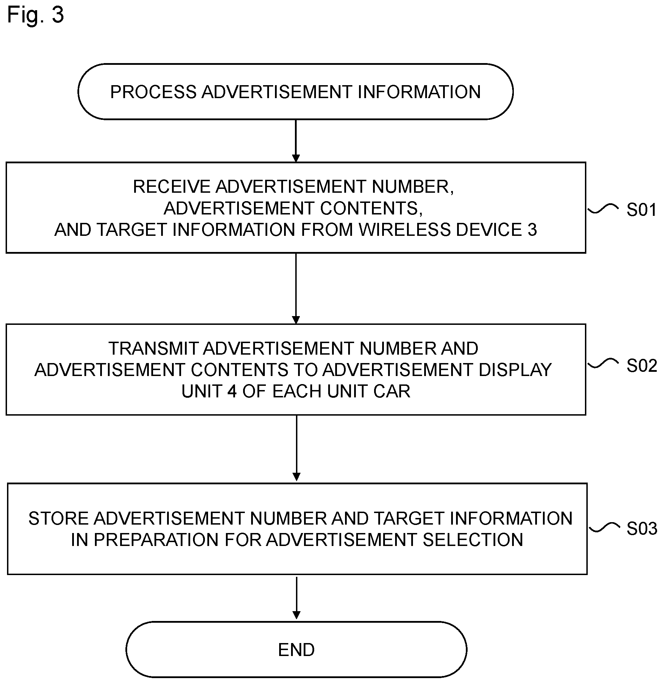

FIG. 3 is a flowchart for explaining processing of advertisement information received at the vehicle 2.

The operation will hereinafter be explained along step numbers shown in FIG. 3.

Step S01: From the wireless device 3, the vehicle information control unit 5 receives an advertisement number, advertisement contents, and target information that are transmitted by the ground equipment 1.

Step S02: The vehicle information control unit 5 transmits the received advertisement number and advertisement contents to the advertisement display unit 4 of each unit car. The advertisement display unit 4 stores these pieces of information in a recording unit in the advertisement display unit 4 so that the information can be read out quickly for advertisement distribution.

Step S03: The vehicle information control unit 5 stores also the advertisement number and the target information, as information used for advertisement selection.

<<Operation of Measuring Leaving Passengers Amount and Boarding Passengers Amount>>

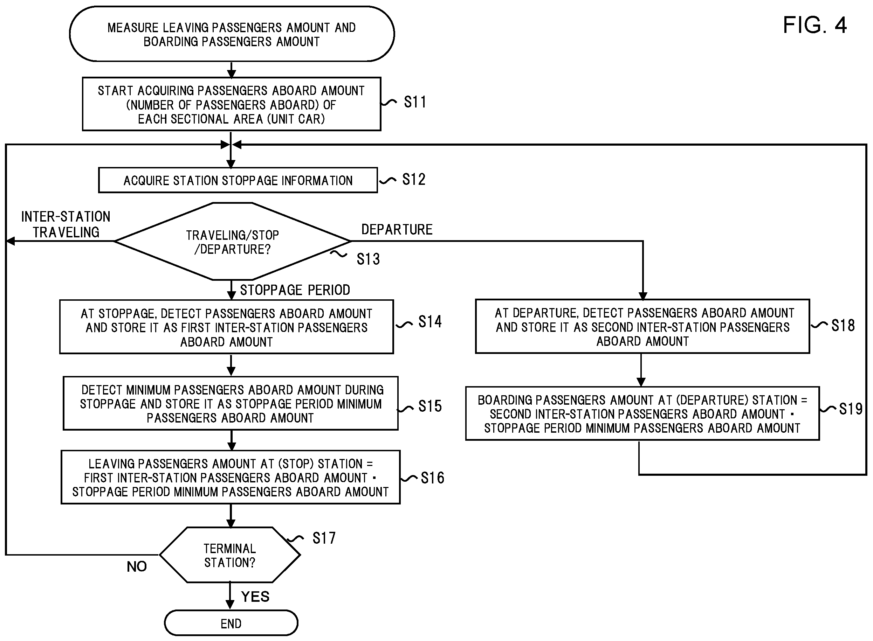

FIG. 4 is a flowchart for explaining an operation of measuring a leaving passengers amount and a boarding passengers amount.

The operation will hereinafter be explained along step numbers shown in FIG. 4.

Step S11: The passengers aboard amount measuring unit 6 starts weight detection of each sectional area (unit car) of the vehicle 2, thereby acquiring a change in the passengers aboard amount of each sectional area. A means for detecting the passengers aboard amount is not limited to detection of the weight of the vehicle 2. "A mechanism for counting leaving passengers and boarding passengers", such as a passenger count system (PCS), Wi-Fi connection data, and captured passenger image analysis by a camera, may also be used as the measuring means.

Step S12: The passengers aboard amount measuring unit 6 acquires station stoppage information from the station stoppage information acquiring unit 9, via the vehicle information control unit 5.

Step S13: Based on the station stoppage information, the passengers aboard amount measuring unit 6 determines a service status of the vehicle 2. When determining that the vehicle 2 is stopped at a station (e.g., the vehicle doors are kept open), the passengers aboard amount measuring unit 6 proceeds to step S14. When determining that the vehicle 2 is running between stations, the passengers aboard amount measuring unit 6 returns to step S12. When determining that the vehicle 2 has their doors shut and is about to depart the station, the passengers aboard amount measuring unit 6 proceeds to step S18.

Step S14: The passengers aboard amount measuring unit 6 detects the passengers aboard amount of each sectional area of the vehicle 2 arriving at a station, and stores the measured passengers aboard amount as a first inter-station passengers aboard amount.

Step S15: When the doors of the vehicle 2 having stopped at the station open, passengers get off the vehicle 2 first and then station users having waited at the station platform get on the vehicle 2.

In order to detect an increase/decrease in the passengers aboard amount, the passengers aboard amount measuring unit 6 detects a decrease in the passengers aboard amount of each sectional area of the vehicle 2, and temporarily stores a minimum passengers aboard amount in a stoppage period, as a stoppage period minimum passengers aboard amount.

Step S16: The passengers aboard amount measuring unit 6 subtracts the stoppage period minimum passengers aboard amount from the first inter-station passengers aboard amount, thereby calculating a leaving passengers amount at the station the vehicle is currently stopped at. The passengers aboard amount measuring unit 6 calculates this leaving passengers amount for each sectional area of the vehicle, thereby obtaining an areal distribution of the leaving passengers amount in the vehicle 2.

Step S17: Based on station stoppage information from the station stoppage information acquiring unit 9, the passengers aboard amount measuring unit 6 determines whether the station the vehicle is currently stopped at is a terminal station. When the station is the terminal station, the passengers aboard amount measuring unit 6 ends the operation. When the station is not the terminal station, on the other hand, the passengers aboard amount measuring unit 6 returns to step S12 in order to deal with a change in the service status of the vehicle 2.

Step S18: The passengers aboard amount measuring unit 6 detects the passengers aboard amount of each sectional area of the vehicle 2 departing from a station, and stores the detected passengers aboard amount as a second inter-station passengers aboard amount.

Step S19: The passengers aboard amount measuring unit 6 subtracts the stoppage period minimum passengers aboard amount from the second inter-station passengers aboard amount, thereby calculating a boarding passengers amount at the station the vehicle 2 departs from. The passengers aboard amount measuring unit 6 calculates this boarding passengers amount for each sectional area of the vehicle, thereby obtaining an areal distribution of the boarding passengers amount in the vehicle 2. Subsequently, to deal with a change in the service status of the vehicle 2, the passengers aboard amount measuring unit 6 returns to step S12.

Through the above processes, a change in an areal distribution of the leaving passengers amount and the boarding passengers amount in the vehicle 2 is measured for each station.

<<Description of Amount of Station Users>>

A change in the amount of station users in the vehicle 2 will then be described specifically.

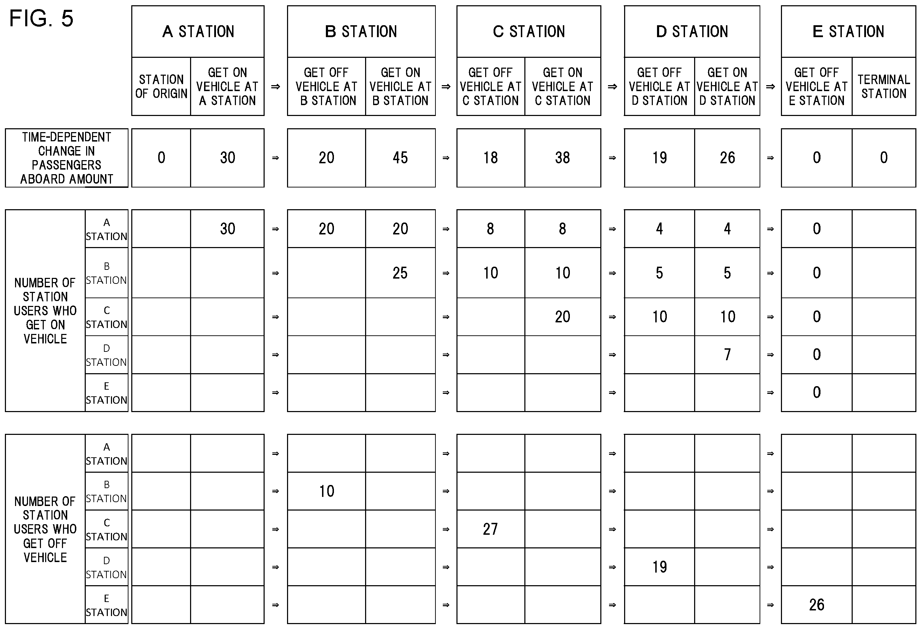

FIG. 5 is a diagram showing specific cases of the amount of station users.

In FIG. 5, 30 persons get on the vehicle 2 at an A station, which is the station of origin. Because these 30 persons are station users who get on the vehicle 2 at the station A, the number (amount) of station users who get on the vehicle 2 at the station A is 30 in the vehicle 2 at this point of time.

At a station B, 10 persons get off the vehicle 2, which reduces the number of station users who get on the vehicle 2 at the station A, from 30 to 20. Meanwhile, at the station B, 25 persons get on the vehicle 2, so that the number of station users who get on the vehicle 2 at the station B are now 25 in the vehicle 2. A ratio between (number of station users who get on the vehicle 2 at the station A) and (number of station users who get on the vehicle 2 at the station B) at this point of time is, therefore, (20) : (25).

At a station C, 27 passengers out of the 45 passengers get off the vehicle 2. A leaving-the-vehicle ratio at the C station is, therefore, (27/45). Assuming that passengers get off the vehicle 2 at the C station regardless of at which station the passengers get on the vehicle 2, a station user amount Jac representing the number of station users who get on the vehicle 2 at the station A and remain in the vehicle 2 at the station C is estimated by the following equation.

$$\mathtt{Jac\ =\ (20\ passengers)\ \times\ [1\ -\ (27/45)]\ =\ 8\ passengers}$$

Similarly, a station user amount Jbc representing the number of station users who get on the vehicle 2 at the station B and remain in the vehicle 2 at the station C is estimated by the following equation.

$$\mathtt{Jbc\ =\ (25\ passengers)\ \times\ [1\ -\ (27/45)]\ =\ 10\ passengers}$$

Subsequently, at the C station, 20 persons get on the vehicle 2, so that the number of station users who get on the vehicle 2 at the C station is now 20.

A ratio between (number of station users who get on the vehicle 2 at the station A) and (number of station users who get on the vehicle 2 at the station B) and (number of station users who get on the vehicle 2 at the station C) at this point of time is, therefore, (8) : (10) : (20) .

At a D station, 19 passengers out of the 38 passengers get off the vehicle 2. A leaving-the-vehicle ratio at the D station is, therefore, (19/38). In this case, a station user amount Jad representing the number of station users who get on the vehicle 2 at the station A and remain in the vehicle 2 at the station D is estimated by the following equation.

$$Jad = (8 \text{ passengers}) \times [1 - (19/38)] = 4 \text{ passengers}$$

Similarly, a station user amount Jbd representing the number of station users who get on the vehicle 2 at the station B and remain in the vehicle 2 at the station D is estimated by the following equation.

$$Jbd = (10 \text{ passengers}) \times [1 - (19/38)] = 5 \text{ passengers}$$

Similarly, a station user amount Jcd representing the number of station users who get on the vehicle 2 at the station C and remain in the vehicle 2 at the station D is estimated by the following equation.

$$Jcd = (20 \text{ passengers}) \times [1 - (19/38)] = 10 \text{ passengers}$$

Subsequently, at the D station, 7 persons get on the vehicle 2, so that the number of station users who get on the vehicle 2 at the D station is now 7.

A ratio between (number of station users who get on the vehicle 2 at the station A) and (number of station users who get on the vehicle at the station B) and (number of station users who get on the vehicle 2 at the station C) and (number of station users who get on the vehicle 2 at the station D) at this point of time is, therefore, (4) : (5) : (10) : (7).

At an E station, which is the terminal station, 26 passengers all get off the vehicle 2. In the section between the D station and the E station, therefore, the number of station users who get off the vehicle 2 at the E station is 26.

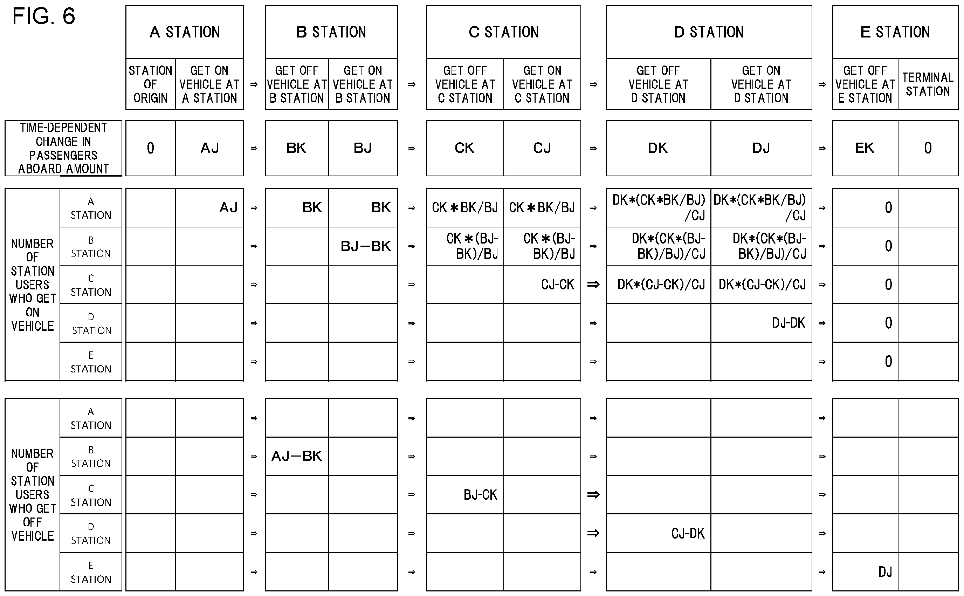

FIG. 6 is a diagram showing changes in the above amount of station users, the changes being expressed in the form of general formulae.

In FIG. 6, stoppage period minimum passengers aboard amounts at the B station to the E station are denoted respectively as BK to EK, and passengers aboard amounts at departure at the A station to the D station (inter-station passengers aboard amounts) are denoted respectively as AJ to DJ.

For example, a breakdown of passengers in the vehicle 2 departing from the C station can be estimated as follows.

(1) The number (amount) of station users who get on the vehicle 2 at the A station (CK * BK/BJ)

(2) The number of station users who get on the vehicle 2 at the B station (CK * (BJ - BK)/BJ)

(3) The number of station users who get on the vehicle 2 at the C station (CJ - CK)

Meanwhile, a breakdown of passengers who get off the vehicle 2 at the D station and the E station, among the passengers in the vehicle 2 departing from the station C, is as follows.

(4) The number of station users who get off the vehicle 2 at the D station (CJ - DK)

(5) The number of station users who get off the vehicle 2 at the E station (DK)

Now the relationship of (1) + (2) + (3) = (4) + (5) = passengers aboard amount of vehicle 2 departing from C station is established.

Generalizing the above relationship gives the following equation.

"Number of station users who get on vehicle 2 at X station" at K station (K station follows X station from which vehicle 2 departs)

= number of persons who get off vehicle 2 at K station × number of persons who get off vehicle 2 at (K - 1) station ×... number of persons who get off vehicle 2 at (X + 1) station × (number of persons who get on vehicle 2 at X station - number of persons who get off vehicle 2 at X station)/number of persons who get on vehicle 2 at X station/number of persons who get on vehicle 2 at (X + 1) station/.../number of persons who get on vehicle 2 at (K - 1) station...  (equation 1)

This equation 1 is related to the vehicle 2 having departed from the X station, allowing estimation of changes in "the number of station users who get on the vehicle 2 at the X station" in the vehicle 2, based on a result of measurement of a boarding passengers amount representing the number of passengers who get on the vehicle 2 at the X station and on a leaving-the-vehicle ratio at each station following the X station from which the vehicle 2 departs.

"Number of station users who get off vehicle 2 at X station" at K station (K station precedes X station at which vehicle 2 arrives)

= number of passengers during traveling in section between (X - 1) station and X station - number of passengers aboard after passengers get off vehicle 2 at X station/number of passengers during traveling in section between (X - 1) station and X station * number of passengers aboard after passengers get off vehicle 2 at (X - 1) station/number of passengers aboard after passengers get on vehicle 2 at (X - 2) station *... number of passengers aboard after passengers get off vehicle 2 at K station... (equation 2)

This equation 2 is related to the vehicle 2 not arriving at X station yet, allowing estimation of changes in "the number of station users who get off the vehicle 2 at the X station" in the vehicle 2, based on the passengers aboard amount of the vehicle 2 and on a leaving-the-vehicle ratio at each station preceding the X station.

It should be noted that the entire information necessary for calculations by the equations 1 and 2 is provided at a point of time at which the vehicle 2 arrives at the terminal station. When the vehicle 2 is still in the middle of its service, however, part of that information for the equations 1 and 2 is not fixed yet. It is therefore preferable that at a point of time of estimation, the vehicle information control unit 5 makes calculations using past information temporarily in place of the unfixed information (preferably, past information on the same day of the week and the same time zone) and makes recalculations using the latest information replacing the past information at a point of time at which the latest information on the vehicle 2 in service is fixed.

<<Description of Operation of Advertisement Matching>>

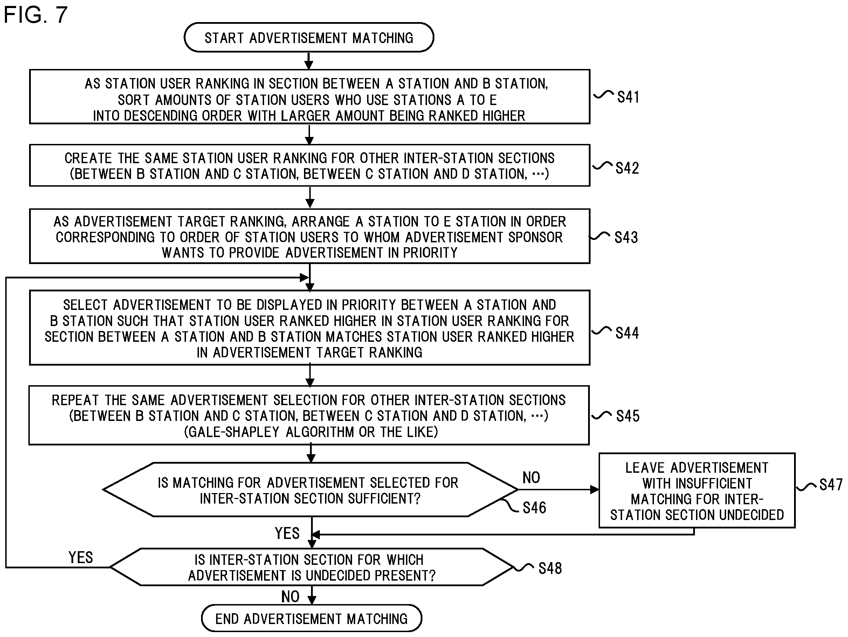

FIG. 7 is a flowchart showing an operation of advertisement matching.

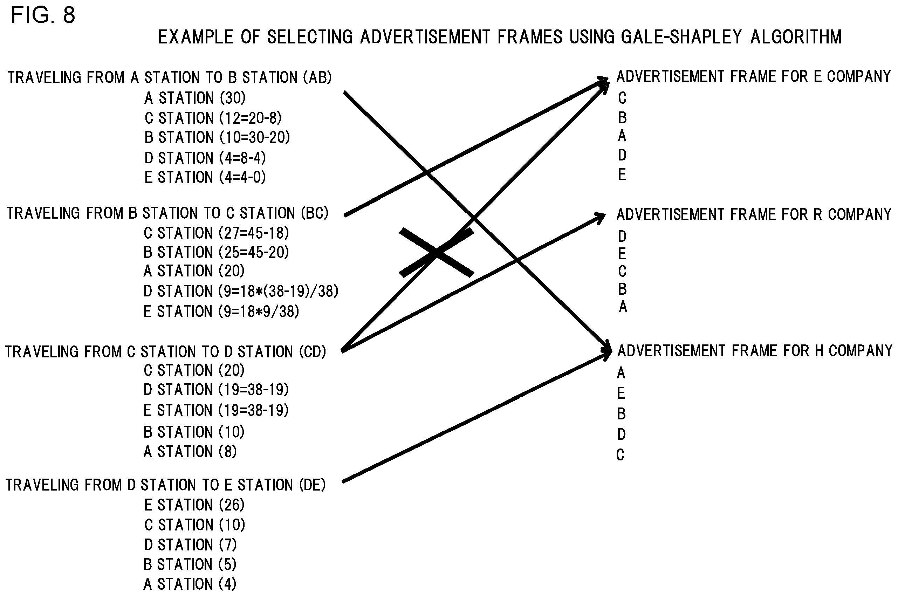

FIG. 8 is a diagram showing a process of advertisement matching.

The operation of advertisement matching will hereinafter be described with reference to FIGS. 7 and 8.

Step S41: The vehicle information control unit 5 acquires information on the amounts of station users who use the A station to E station, as a breakdown of passengers aboard on the vehicle 2 traveling between the A station and the B station (after departing from the A station). The vehicle information control unit 5 sorts the amounts of station users who use the A station to E station into descending order with a larger amount being ranked high, thus creating a ranking of station users in the vehicle 2 traveling between the A station and the B station.

When the amount of station users is acquired as "an areal distribution in each sectional area (unit car) of the vehicle 2", the vehicle information control unit 5 creates a ranking of station users for each sectional area.

Step S42: For the remaining inter-station sections (between the station B and the station C, between the station C and the station D,...), the vehicle information control unit 5 creates a ranking of station users in the same manner as at step S41.

In FIG. 8, the rankings of station users created respectively for inter-station sections are shown on the left side.

Step S43: Based on advertisement target information received from the ground equipment 1, the vehicle information control unit 5 changes the order of the A station to E station into the order corresponding to the order of station users to whom an advertisement sponsor wants to provide an advertisement in priority (first choice user, second choice user,...), thus creating an advertisement target ranking.

In FIG. 8, the respective advertisement target rankings of advertisement sponsors are shown on the right side.

Step S44: The vehicle information control unit 5 selects a combination in such a way as to match a station user ranked higher in the station user ranking between the station A and the station B to a station user ranked higher in the advertisement target ranking (a combination indicated by an arrow in FIG. 8), thereby selecting an advertisement to be displayed in priority between the A station and the B station.

When the amount of station users is acquired as "an areal distribution in each sectional area (unit car) of the vehicle 2", the vehicle information control unit 5 matches a station user ranked higher in the station user ranking to a station user ranked higher in the advertisement target ranking for each sectional area, thereby selecting an advertisement to be displayed in priority for each sectional area.

Step S45: For the remaining inter-station sections (between the station B and the station C, between the station C and the station D,...), the vehicle information control unit 5 repeats advertisement selection in the same manner as at step S44.

By repeating such advertisement selection sufficiently, a schedule for advertisements to be displayed in the vehicle 2 is created under a condition in which the target attributes related to the station use of the passengers in the vehicle 2 and target information on advertisement are matched to each other.

As an algorithm for performing such selection, for example, a Gale-Shapley algorithm is an efficient algorithm.

In the advertisement matching shown in FIG. 8, this Gale-Shapley algorithm is used.

According to the Gale-Shapley algorithm, advertisement matching is performed in the direction of heading from the "inter-station" side to the "advertisement" side according to the following rules.

(1) Temporarily set an arrow (advertisement frame) heading from the inter-station side to the advertisement side such that a station user ranked higher in the station user ranking on the inter-section side matches a station user ranked higher in the target ranking as much as possible.

(2) When more than the necessary number of arrows (advertisement frames) coming from the inter-station side are set on the advertisement side, the advertisement side selects an arrow considered to be disadvantageous as an advertisement target and deletes such an arrow (× mark in FIG. 8 indicates a deleted arrow). The inter-station side is not allowed to set the deleted arrow again.

(3) Repeat (1) and (2) until assignment of advertisements to the inter-station side becomes sufficiently stable.

It should be noted that performing advertisement matching in the direction of heading from the "advertisement" side to the "inter-station" side may also be possible.

In addition, advertisement selection may be performed by adding a condition that prioritizes combinations that increase advertising revenues.

Further, advertisement selection may be performed by adding a condition such as displaying advertisements at an interval for the advertisements competing against each other.

Further, advertisement selection may be performed by adding a condition such as preferentially allocating an advertisement frame to the advertisement for which the advertisement frame is not fixed.

Furthermore, advertisements may be provided in further subdivided units by subdividing inter-station traveling periods or subdividing sectional areas in which advertisements are provided.

Step S46: The vehicle information control unit 5 determines whether advertisement matching for a created advertisement schedule is sufficient (e.g., whether an advertisement selected for an inter-station section satisfies advertisement providing conditions, such as target information and advertisement costs). When the advertisement matching is sufficient, the vehicle information control unit 5 proceeds to step S48. When the advertisement matching is not sufficient, the vehicle information control unit 5 proceeds to step S47.

Step S47: The vehicle information control unit 5 leaves an advertisement for an inter-station section with insufficient advertisement matching undecided.

Step S48: The vehicle information control unit 5 determines whether an inter-station section for which an advertisement is not decided yet is present. When such an inter-station section is present, the vehicle information control unit 5 returns to step S44 and continues the advertisement matching. When advertisements for all inter-station sections have been decided, on the other hand, the vehicle information control unit 5 ends the advertisement matching.

The vehicle information control unit 5 delivers the advertisement schedule decided by the advertisement matching, to the advertisement display unit 4, thus carrying out advertisement distribution. Meanwhile, which advertisement is displayed at which time is recorded in the recording unit 8, and is used as a charge to an advertiser or as proof of advertisement display.

<<Effects of Embodiment>>

In the past, dynamically and timely acquiring the attributes of passengers has been difficult for an advertisement in a vehicle. Therefore, it has been difficult to provide an advertisement for target passengers to whom the advertisement sponsor wants to provide an advertisement.

According to the embodiment, however, the leaving passengers amount and the boarding passengers amount are measured at each station, and based on the result of the measurement, in what way the amount of station users at a given station (the number of passengers who get on or off the vehicle 2 at a given station) has changed in the vehicle 2 every time the vehicle 2 stops at a station can be estimated. In the embodiment, based on the amount of station users estimated in such a manner, an advertisement can be provided, with a station that passengers in the vehicle 2 uses as a boarding/leaving station being set as a target station.

According to the embodiment, for the vehicle 2, the passengers aboard amount at arrival at a station (hereinafter "first inter-station passengers aboard amount"), the minimum passengers aboard amount during a period of stoppage at a station (hereinafter "stoppage period minimum passengers aboard amount"), and the passengers aboard amount at departure from a station (hereinafter "second inter-station passengers aboard amount") are measured. In general, when people get on and off a public transportation facility, persons get off the vehicle first and then persons get on the vehicle. Based on such a boarding/leaving practice, according to the embodiment, a leaving passengers amount can be determined from a difference between the first inter-station passengers aboard amount and the stoppage period minimum passengers aboard amount, and a boarding passengers amount can be determined from a difference between the second inter-station passengers aboard amount and the stoppage period minimum passengers aboard amount.

According to the embodiment, for the vehicle 2 having departed from a given station, a change in the number (amount) of station users who get on the vehicle at the given station in the vehicle is estimated, based on the result of measurement of the boarding passengers amount representing the number of persons who get on the vehicle at the given station and on a leaving-the-vehicle ratio at each station following the given station from which the vehicle departs. In the embodiment, therefore, an advertisement can be provided, with a station that passengers in the vehicle 2 use as a boarding station being set as a target station.

According to the embodiment, for the vehicle 2 not arriving at a given station yet, a change in the number (amount) of station users who get off the vehicle at the given station in the vehicle is estimated, based on the passengers aboard amount of the vehicle 2 and on a leaving-the-vehicle ratio at each station preceding the given station. In the embodiment, therefore, an advertisement can be provided, with a station assumed to be a station used by passengers in the vehicle 2 as a leaving station being set as a target station.

According to the embodiment, the leaving passengers amount and the boarding passengers amount are measured for each sectional area of the vehicle. This allows estimating the number of station users aboard who uses the given station, as an areal distribution in each sectional area. In the embodiment, based on this areal distribution of the amount of station users, an in-vehicle areal distribution of an advertisement provided to passengers in the vehicle is changed. Because passengers are not always aboard the vehicle 2 uniformly, the target attributes of the passengers in the vehicle 2 are unbalanced. According to the embodiment, however, the unbalanced target attributes can be detected as the areal distribution of the amount of station users. Hence, an advertisement with a target set for each sectional area of the vehicle 2 can be provided.

According to the embodiment, the leaving passengers amount and the boarding passengers amount are measured, using a "mechanism for measuring the weight of the vehicle 2". Conventionally, railway vehicles are equipped with such a weight measuring mechanism. The railway vehicles, therefore, can measure the leaving passengers amount and the boarding passengers amount without being equipped with a new mechanism.

According to the embodiment, the leaving passengers amount and the boarding passengers amount can also be measured, using a "mechanism for counting leaving passengers and boarding passengers". By weight measurement, only the approximate number of passengers can be grasped because individual passengers are different in their weights. In the embodiment, however, using the "mechanism for counting leaving passengers and boarding passengers" allows grasping the exact number of passengers.

According to the embodiment, an advertisement to be delivered in priority to the passengers in the vehicle is changed, based on a change in the amount of station users using a given station and on a degree of priority of the advertisement to the station users using the given station. This allows provision of an advertisement for target passengers who use the given station in the vehicle 2.

According to the embodiment, any given number of stations ranging from one station to all stations can be defined as given stations. In this case, by adopting the Gale-Shapley algorithm or the like, an advertisement to be delivered in priority to passengers of the vehicle can be selected properly.

<<Supplementary to Embodiment>>

In general transportation services, a vehicle carrying customers travels by exactly following a given time schedule. Therefore, the vehicle 2 travels the same place in the same time zone in many cases. By statistically processing the leaving passengers amount and the boarding passengers amount of the vehicle 2, using fixed days of the week, the number of days, a period, etc., the leaving passengers amount and the boarding passengers amount can be obtained as stable numerical values. In this case, stable advertisement selection can be carried out, based on the statistically processed leaving passengers amount and boarding passengers amount of the vehicle 2.

A transportation facility may have an unexpected accident or a delay in service, in which case the leaving passengers amount or the boarding passengers amount temporarily increases or decreases at a specific station. In that case, a change in the service status may be detected to make reassignment of advertisement frames to other stations.

In addition, information exchanged with the ground equipment 1 does not include personal information of passengers (commuter pass information, etc.) unless otherwise required. Such information is, therefore, limited to big data. It is therefore unnecessary to send personal information from the vehicle 2 to an external system or a communication line, which enables a traffic advertisement distribution system with a personal information leak problem being taken into consideration.

In the embodiment, a railway facility has been described to make the overall description understandable. However, the present invention is not limited to the railway facility. The present invention can be applied to any transportation facility in which advertisements can be provided. For example, the present invention can be applied to such transportation facilities as buses, aircrafts, ships, and roads. In that case, boarding/leaving facilities, which are collectively called stations, correspond to bus stops, airports, ports, parking facilities (e.g., service areas, roadside stations, rest facilities), and the like. In that case, the vehicle 2 corresponds to a bus, an airplane, a ship, an automobile, or the like. In the embodiment, the terms "getting on the vehicle" and "getting off the vehicle" are used. "Vehicle" mentioned herein, however, generally refers to vehicles and moving objects and is not limited to a vehicle equipped with wheels.

It should be noted that the present invention is not limited to the above-described embodiment but includes various modifications. For example, the above embodiment has been described in detail for easy understanding of the present invention, and is not necessarily limited to an embodiment including all the constituent elements described above.

Some constituent elements of the embodiment may be replaced with other constituent elements, and a different constituent element may be added to the constituent element of the embodiment.

Reference Signs List

1  ground equipment
2  vehicle
3  wireless device
4  advertisement display unit
5  vehicle information control unit
6  passengers aboard amount measuring unit
8  recording unit
9  station stoppage information acquiring unit
10  in-vehicle person attributes information acquiring unit

**Claims**

1. A traffic advertisement distribution system that distributes an advertisement to a vehicle, the traffic advertisement distribution system comprising:

   a measuring unit that measures a leaving passengers amount and a boarding passengers amount of a vehicle for each boarding/leaving facility (hereinafter "station");
   an estimating unit that based on a measurement result of the measuring unit, estimates an amount of passengers who get on or off one vehicle at a given station (hereinafter "amount of station users"), out of passengers in the one vehicle; and
   a distributing unit that changes an advertisement distributed to the one vehicle, based on a result of estimation of the amount of station users.

2. The traffic advertisement distribution system according to claim 1, wherein
the measuring unit measures, for a vehicle, a passengers aboard amount at arrival at the station (hereinafter "first inter-station passengers aboard amount"), a minimum passengers aboard amount during a period of stoppage at the station (hereinafter "stoppage period minimum passengers aboard amount"), and a passengers aboard amount at departure from the station (hereinafter "second inter-station passengers aboard amount"), determines the leaving passengers amount, based on a difference between the first inter-station passengers aboard amount and the stoppage period minimum passengers aboard amount, and determines the boarding passengers amount, based on a difference between the second inter-station passengers aboard amount and the stoppage period minimum passengers aboard amount.

3. The traffic advertisement distribution system according to claim 1 or 2, wherein
the estimating unit estimates, for one vehicle having departed from the given station, a number of passengers who get on the one vehicle at the given station, out of passengers of the one vehicle, as the amount of station users, based on a result of measurement of the boarding passengers amount representing the number of persons who get on the one vehicle at the given station and on a leaving-the-vehicle ratio at each station following the given station from which the one vehicle departs.

4. The traffic advertisement distribution system according to any one of claims 1 to 3, wherein
the estimating unit estimates, for one vehicle before arriving at the given station, a number of passengers who are expected to get off the one vehicle at the given station, out of passengers of the one vehicle, as the amount of station users, based on the passengers aboard amount of the one vehicle and on a leaving-the-vehicle ratio at each station preceding the given station.

5. The traffic advertisement distribution system according to any one of claims 1 to 4, wherein

the measuring unit measures the leaving passengers amount and the boarding passengers amount for each sectional area of one vehicle,
the estimating unit estimates an areal distribution in the one vehicle of the amount of station users who uses the given station, based on a result of the measurement for each sectional area, and
the distributing unit changes an in-vehicle areal distribution of an advertisement delivered to passengers in the one vehicle, based on the areal distribution of the amount of station users.

6. The traffic advertisement distribution system according to any one of claims 1 to 5, wherein
the measuring unit measures the leaving passengers amount and the boarding passengers amount, using at least either a "mechanism for measuring weight of a vehicle" or a "mechanism for counting leaving passengers and boarding passengers".

7. The traffic advertisement distribution system according to any one of claims 1 to 6, wherein
the distributing unit changes an advertisement to be distributed to the one vehicle, based on a change in the amount of station users who uses the given station and on a degree of priority of the advertisement to the station users who uses the given station.

8. The traffic advertisement distribution system according to any one of claims 1 to 7, wherein

the estimating unit estimates the amount of station users for each of a plurality of the given stations, and
the distributing unit applies a Gale-Shapley algorithm to the amount of station users who use the plurality of given stations and to a degree of priority of an advertisement to the station users who use the plurality of given stations, thereby selecting an advertisement to be distributed to the one vehicle.

9. A traffic advertisement distribution program that causes a computer system to function as the traffic advertisement distribution system according to any one of claim 1 to claim 8.

10. A traffic advertisement distribution method for distributing an advertisement to one vehicle, the traffic advertisement distribution method comprising:

a measuring step of measuring a leaving passengers amount and a boarding passengers amount of the one vehicle for each boarding/leaving facility (hereinafter "station");
an estimating step of estimating a number of passengers who get on or off the one vehicle at a given station (hereinafter "amount of station users"), out of passengers of the one vehicle, based on a result of measurement at the measuring step; and

a distributing step of changing an advertisement to be distributed to the one vehicle, based on a result of estimation of the amount of station users.

FIG. 1

## FIG. 2

PASSENGERS ABOARD AMOUNT MEASURING UNIT 6

PASSENGERS ABOARD AMOUNT, LEAVING PASSENGERS AMOUNT, BOARDING PASSENGERS AMOUNT, MEASUREMENT TIME, ETC.

PASSENGERS ABOARD AMOUNT, LEAVING PASSENGERS AMOUNT, BOARDING PASSENGERS AMOUNT, MEASUREMENT TIME, ADVERTISEMENT NUMBER, TARGET INFORMATION, ADVERTISEMENT NUMBER DISPLAYED, ADVERTISEMENT DISPLAYED TIME, ETC.

RECORDING UNIT 8

PAST RECORD INFORMATION, ETC.

VEHICLE INFORMATION CONTROL UNIT 5

STATION STOPPAGE INFORMATION, ETC.

STATION STOPPAGE INFORMATION ACQUIRING UNIT 9

PASSENGERS ABOARD AMOUNT, LEAVING PASSENGERS AMOUNT, BOARDING PASSENGERS AMOUNT, MEASUREMENT TIME, ADVERTISEMENT NUMBER DISPLAYED, ADVERTISEMENT DISPLAYED TIME, ETC

WIRELESS DEVICE 3

GROUND EQUIPMENT 1

ADVERTISEMENT NUMBER, ADVERTISEMENT CONTENTS, TARGET INFORMATION, ETC.

ADVERTISEMENT DISPLAY UNIT 4

ADVERTISEMENT NUMBER, ADVERTISEMENT CONTENTS, ADVERTISEMENT NUMBER TO BE DISPLAYED, ETC.

IN-VEHICLE PERSON ATTRIBUTES INFORMATION, ETC.

IN-VEHICLE PERSON ATTRIBUTES INFORMATION ACQUIRING UNIT 10

EP 4 012 640 A1

Fig. 3

```
┌─────────────────────────────────────────────┐
│      PROCESS ADVERTISEMENT INFORMATION        │
└─────────────────────────────────────────────┘
                      │
                      ▼
┌─────────────────────────────────────────────┐
│         RECEIVE ADVERTISEMENT NUMBER,         │      S01
│           ADVERTISEMENT CONTENTS,             │
│  AND TARGET INFORMATION FROM WIRELESS DEVICE 3│
└─────────────────────────────────────────────┘
                      │
                      ▼
┌─────────────────────────────────────────────┐
│       TRANSMIT ADVERTISEMENT NUMBER AND       │      S02
│  ADVERTISEMENT CONTENTS TO ADVERTISEMENT DISPLAY│
│            UNIT 4 OF EACH UNIT CAR            │
└─────────────────────────────────────────────┘
                      │
                      ▼
┌─────────────────────────────────────────────┐
│ STORE ADVERTISEMENT NUMBER AND TARGET INFORMATION│   S03
│   IN PREPARATION FOR ADVERTISEMENT SELECTION  │
└─────────────────────────────────────────────┘
                      │
                      ▼
┌─────────────────────────────────────────────┐
│                    END                        │
└─────────────────────────────────────────────┘
```

FIG. 4

MEASURE LEAVING PASSENGERS AMOUNT AND
BOARDING PASSENGERS AMOUNT

START ACQUIRING PASSENGERS ABOARD AMOUNT
(NUMBER OF PASSENGERS ABOARD) OF
EACH SECTIONAL AREA (UNIT CAR) ～ S11

ACQUIRE STATION STOPPAGE INFORMATION ～ S12

INTER-STATION
TRAVELING

TRAVELING/STOP
/DEPARTURE? ～ S13

DEPARTURE

STOPPAGE PERIOD

AT STOPPAGE, DETECT PASSENGERS ABOARD AMOUNT
AND STORE IT AS FIRST INTER-STATION PASSENGERS
ABOARD AMOUNT ～ S14

AT DEPARTURE, DETECT PASSENGERS ABOARD AMOUNT
AND STORE IT AS SECOND INTER-STATION PASSENGERS
ABOARD AMOUNT ～ S18

DETECT MINIMUM PASSENGERS ABOARD AMOUNT DURING
STOPPAGE AND STORE IT AS STOPPAGE PERIOD MINIMUM
PASSENGERS ABOARD AMOUNT ～ S15

BOARDING PASSENGERS AMOUNT AT (DEPARTURE) STATION =
SECOND INTER-STATION PASSENGERS ABOARD AMOUNT ·
STOPPAGE PERIOD MINIMUM PASSENGERS ABOARD AMOUNT ～ S19

LEAVING PASSENGERS AMOUNT AT (STOP) STATION =
FIRST INTER-STATION PASSENGERS ABOARD AMOUNT ·
STOPPAGE PERIOD MINIMUM PASSENGERS ABOARD AMOUNT ～ S16

TERMINAL
STATION? ～ S17

NO

YES

END

EP 4 012 640 A1

# FIG. 5

| | | A STATION | A STATION | | B STATION | B STATION | | C STATION | C STATION | | D STATION | D STATION | | E STATION | E STATION |
|---|---|---|---|---|---|---|---|---|---|---|---|---|---|---|---|
| | | STATION OF ORIGIN | GET ON VEHICLE AT A STATION | ⇒ | GET OFF VEHICLE AT B STATION | GET ON VEHICLE AT B STATION | ⇒ | GET OFF VEHICLE AT C STATION | GET ON VEHICLE AT C STATION | ⇒ | GET OFF VEHICLE AT D STATION | GET ON VEHICLE AT D STATION | ⇒ | GET OFF VEHICLE AT E STATION | TERMINAL STATION |
| TIME-DEPENDENT CHANGE IN PASSENGERS ABOARD AMOUNT | | 0 | 30 | ⇒ | 20 | 45 | ⇒ | 18 | 38 | ⇒ | 19 | 26 | ⇒ | 0 | 0 |
| NUMBER OF STATION USERS WHO GET ON VEHICLE | A STATION | | 30 | ⇒ | 20 | 20 | ⇒ | 8 | 8 | ⇒ | 4 | 4 | ⇒ | 0 | |
| | B STATION | | | ⇒ | | 25 | ⇒ | 10 | 10 | ⇒ | 5 | 5 | ⇒ | 0 | |
| | C STATION | | | ⇒ | | | ⇒ | | 20 | ⇒ | 10 | 10 | ⇒ | 0 | |
| | D STATION | | | ⇒ | | | ⇒ | | | ⇒ | | 7 | ⇒ | 0 | |
| | E STATION | | | ⇒ | | | ⇒ | | | ⇒ | | | ⇒ | 0 | |
| NUMBER OF STATION USERS WHO GET OFF VEHICLE | A STATION | | | ⇒ | | | ⇒ | | | ⇒ | | | ⇒ | | |
| | B STATION | | | ⇒ | 10 | | ⇒ | | | ⇒ | | | ⇒ | | |
| | C STATION | | | ⇒ | | | ⇒ | 27 | | ⇒ | | | ⇒ | | |
| | D STATION | | | ⇒ | | | ⇒ | | | ⇒ | 19 | | ⇒ | | |
| | E STATION | | | ⇒ | | | ⇒ | | | ⇒ | | | ⇒ | 26 | |

# FIG. 6

EP 4 012 640 A1

| | | A STATION | | | B STATION | | | C STATION | | | D STATION | | | E STATION | |
|---|---|---|---|---|---|---|---|---|---|---|---|---|---|---|---|---|
| | | STATION OF ORIGIN | GET ON VEHICLE AT A STATION | ⇒ | GET OFF VEHICLE AT B STATION | GET ON VEHICLE AT B STATION | ⇒ | GET OFF VEHICLE AT C STATION | GET ON VEHICLE AT C STATION | ⇒ | GET OFF VEHICLE AT D STATION | GET ON VEHICLE AT D STATION | ⇒ | GET OFF VEHICLE AT E STATION | TERMINAL STATION |
| **TIME-DEPENDENT CHANGE IN PASSENGERS ABOARD AMOUNT** | | 0 | AJ | ⇒ | BK | BJ | ⇒ | CK | CJ | ⇒ | DK | DJ | ⇒ | EK | 0 |
| **NUMBER OF STATION USERS WHO GET ON VEHICLE** | A STATION | | AJ | ⇒ | BK | BK | ⇒ | CK∗BK/BJ | CK∗BK/BJ | ⇒ | DK∗(CK∗BK/BJ)/CJ | DK∗(CK∗BK/BJ)/CJ | ⇒ | 0 | |
| | B STATION | | | ⇒ | | BJ−BK | ⇒ | CK∗(BJ−BK)/BJ | CK∗(BJ−BK)/BJ | ⇒ | DK∗(CK∗(BJ−BK)/BJ)/CJ | DK∗(CK∗(BJ−BK)/BJ)/CJ | ⇒ | 0 | |
| | C STATION | | | ⇒ | | | ⇒ | | CJ−CK | ⇒ | DK∗(CJ−CK)/CJ | DK∗(CJ−CK)/CJ | ⇒ | 0 | |
| | D STATION | | | ⇒ | | | ⇒ | | | ⇒ | | DJ−DK | ⇒ | 0 | |
| | E STATION | | | ⇒ | | | ⇒ | | | ⇒ | | | ⇒ | 0 | |
| **NUMBER OF STATION USERS WHO GET OFF VEHICLE** | A STATION | | | ⇒ | | | ⇒ | | | ⇒ | | | ⇒ | | |
| | B STATION | | | ⇒ | AJ−BK | | ⇒ | | | ⇒ | | | ⇒ | | |
| | C STATION | | | ⇒ | | | ⇒ | BJ−CK | | ⇒ | | | ⇒ | | |
| | D STATION | | | ⇒ | | | ⇒ | | | ⇒ | CJ−DK | | ⇒ | | |
| | E STATION | | | ⇒ | | | ⇒ | | | ⇒ | | | ⇒ | DJ | |

## FIG. 7

START ADVERTISEMENT MATCHING

AS STATION USER RANKING IN SECTION BETWEEN A STATION AND B STATION, SORT AMOUNTS OF STATION USERS WHO USE STATIONS A TO E INTO DESCENDING ORDER WITH LARGER AMOUNT BEING RANKED HIGHER — S41

CREATE THE SAME STATION USER RANKING FOR OTHER INTER-STATION SECTIONS (BETWEEN B STATION AND C STATION, BETWEEN C STATION AND D STATION, ⋯) — S42

AS ADVERTISEMENT TARGET RANKING, ARRANGE A STATION TO E STATION IN ORDER CORRESPONDING TO ORDER OF STATION USERS TO WHOM ADVERTISEMENT SPONSOR WANTS TO PROVIDE ADVERTISEMENT IN PRIORITY — S43

SELECT ADVERTISEMENT TO BE DISPLAYED IN PRIORITY BETWEEN A STATION AND B STATION SUCH THAT STATION USER RANKED HIGHER IN STATION USER RANKING FOR SECTION BETWEEN A STATION AND B STATION MATCHES STATION USER RANKED HIGHER IN ADVERTISEMENT TARGET RANKING — S44

REPEAT THE SAME ADVERTISEMENT SELECTION FOR OTHER INTER-STATION SECTIONS (BETWEEN B STATION AND C STATION, BETWEEN C STATION AND D STATION, ⋯) (GALE-SHAPLEY ALGORITHM OR THE LIKE) — S45

IS MATCHING FOR ADVERTISEMENT SELECTED FOR INTER-STATION SECTION SUFFICIENT? — S46

NO → LEAVE ADVERTISEMENT WITH INSUFFICIENT MATCHING FOR INTER-STATION SECTION UNDECIDED — S47

YES

IS INTER-STATION SECTION FOR WHICH ADVERTISEMENT IS UNDECIDED PRESENT? — S48

YES

NO

END ADVERTISEMENT MATCHING

# FIG. 8

## EXAMPLE OF SELECTING ADVERTISEMENT FRAMES USING GALE-SHAPLEY ALGORITHM

TRAVELING FROM A STATION TO B STATION (AB)
    A STATION (30)
    C STATION (12=20-8)
    B STATION (10=30-20)
    D STATION (4=8-4)
    E STATION (4=4-0)

TRAVELING FROM B STATION TO C STATION (BC)
    C STATION (27=45-18)
    B STATION (25=45-20)
    A STATION (20)
    D STATION (9=18*(38-19)/38)
    E STATION (9=18*9/38)

TRAVELING FROM C STATION TO D STATION (CD)
    C STATION (20)
    D STATION (19=38-19)
    E STATION (19=38-19)
    B STATION (10)
    A STATION (8)

TRAVELING FROM D STATION TO E STATION (DE)
    E STATION (26)
    C STATION (10)
    D STATION (7)
    B STATION (5)
    A STATION (4)

ADVERTISEMENT FRAME FOR E COMPANY
    C
    B
    A
    D
    E

ADVERTISEMENT FRAME FOR R COMPANY
    D
    E
    C
    B
    A

ADVERTISEMENT FRAME FOR H COMPANY
    A
    E
    B
    D
    C

EP 4 012 640 A1

## INTERNATIONAL SEARCH REPORT

| | International application No. |
|---|---|
| | PCT/JP2020/020231 |

### A. CLASSIFICATION OF SUBJECT MATTER
Int.Cl. G06Q30/02(2012.01)i, G06Q50/30(2012.01)i
FI: G06Q30/02398, G06Q50/30

According to International Patent Classification (IPC) or to both national classification and IPC

### B. FIELDS SEARCHED

Minimum documentation searched (classification system followed by classification symbols)
Int.Cl. G06Q30/02, G06Q50/30

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-117633 A (FUJITSU FSAS INC.) 27.05.2010 (2010-05-27), paragraphs [0006], [0008], [0014], [0017], [0018], fig. 1, 11 | 1-4, 10<br>5-9 |
| Y | JP 2013-255186 A (YAHOO JAPAN CORPORATION) 19.12.2013 (2013-12-19), paragraphs [0002], [0082], fig. 16 | 5-9 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19.08.2020 | 01.09.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

Information on patent family members

International application No.

PCT/JP2020/020231

```
JP 2010-117633 A   27.05.2010   (Family: none)

JP 2013-255186 A   19.12.2013   (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010197677 A

- JP 2010282590 A